# EUROPÄISCHE PATENTSCHRIFT

(11) **EP 3 483 492 B1**
(45) Veröffentlichungstag und Bekanntmachung des Hinweises auf die Patenterteilung: **16.03.2022**
(21) Anmeldenummer: 18190528.2
(22) Anmeldetag: 23.08.2018
(51) Int. Cl.: F16L 47/32, F16L 41/02, F16L 7/02, F16L 47/03, F16L 55/11, F16L 55/115, G02B 6/50, G02B 6/44

(54) **FITTINGSYSTEM ZUR EINFÜHRUNG EINER GLASFASERTRANSPORTLEITUNG IN EINE GASLEITUNG, SYSTEM MIT EINEM SOLCHEN FITTINGSYSTEM UND VERFAHREN ZUM VERLEGEN EINER GLASFASERTRANSPORTLEITUNG**
FITTING SYSTEM FOR INTRODUCING AN OPTICAL FIBRE TRANSPORT LINE IN A GAS PIPE, SYSTEM COMPRISING SUCH A FITTING SYSTEM AND A METHOD FOR LAYING AN OPTICAL FIBRE TRANSPORT CONDUIT
SYSTÈME DE MISE EN PLACE PERMETTANT D'INTRODUIRE UNE CONDUITE DE TRANSPORT EN FIBRE DE VERRE DANS UNE CONDUITE DE GAZ, SYSTÈME DOTÉ D'UN TEL SYSTÈME DE MISE EN PLACE ET PROCÉDÉ DE POSE D'UNE CONDUITE DE TRANSPORT EN FIBRE DE VERRE

(30) Priorität: 09.11.2017 DE 102017126250
(43) Veröffentlichungstag der Anmeldung: 15.05.2019
(73) Patentinhaber: Westnetz GmbH, 44139 Dortmund (DE)
(72) Erfinder: Ewering, Dietmar, 48565 Steinfurt (DE)
(74) Vertreter: Cohausz & Florack

(56) Entgegenhaltungen:
- EP-A1- 0 497 573
- EP-A1- 0 780 942
- EP-A1- 1 011 001
- DE-A1- 3 140 928
- DE-C1- 3 937 690
- JP-A- H08 334 195
- US-A- 4 756 510
- US-A1- 2002 114 595
- US-A1- 2004 247 264

## Beschreibung

Die Erfindung betrifft ein Fittingsystem zur Einführung einer Glasfasertransportleitung in eine Gasleitung sowie ein System mit einem solchen Fittingsystem. Darüber hinaus betrifft die Erfindung die Verwendung des Fittingsystems bzw. des Systems zum Verlegen einer Glasfasertransportleitung in einer Gasleitung sowie ein Verfahren zum Verlegen einer Glasfasertransportleitung unter Verwendung des Systems.

Aufgrund des steigenden Bedarfs an breitbandigen Datenverbindungen besteht in vielen Regionen ein Bedürfnis, den Ausbau der Glasfaserinfrastruktur voranzutreiben. Die Erschließung gerade ländlicher Strukturen mit Glasfaser ist jedoch insbesondere aufgrund der hohen Tiefbaukosten mit hohen Investitionskosten verbunden und zum Teil nicht wirtschaftlich darstellbar. Eine mögliche Lösung dieses Problems könnte in der Einbringung der Glasfaserleitungen in die in weiten Bereichen vorhandene Gasverteilnetzinfrastruktur liegen. Dies wurde zwar bereits vorgeschlagen, konnte sich in der Praxis jedoch nicht durchsetzen, da es an einer praktikablen Technik fehlt, um die Glasfaserleitungen in eine Gasleitung hinein- bzw. aus dieser herauszuführen.

Verschiedene Vorschläge für Vorrichtungen und Verfahren zur Durchführung von Datenleitungen (Glasfaserkabel, Fernmeldeleitungen oder ähnliches) durch Versorgungsleitungen (Gasleitungen, Wasserleitungen oder ähnliches) sind zum Beispiel aus den Druckschriften US 2002/0114595 A1, US 4 756 510, DE 31 40 928 A1, US 2004/0247264 A1, EP 1011 001A1 und EP 0 780 942 A1 bekannt.

Vor diesem Hintergrund liegt der vorliegenden Erfindung die Aufgabe zugrunde, ein System und ein Verfahren zur Verfügung zu stellen, mit denen die Verlegung von Glasfaserleitungen in einer Gasleitung einfacher, sicherer und zuverlässiger durchgeführt werden kann.

Diese Aufgabe wird erfindungsgemäß gelöst durch ein Fittingsystem gemäß Anspruch 1.

Weiterhin wird die oben genannte Aufgabe erfindungsgemäß gelöst durch ein System mit dem zuvor beschriebenen Fittingsystem und mit einer Glasfasertransportleitung, wobei die Innenkontur des Durchgangskanals des Abzweigverschlusses an die Außenkontur der Glasfasertransportleitung angepasst ist.

Das zuvor beschriebene Fittingsystem erlaubt es, eine in einer Gasleitung zu verlegende Glasfasertransportleitung einfach und sicher in die Gasleitung ein- bzw. aus dieser herauszuführen. Auf diese Weise entsteht durch die Installation des Fittingsystems eine Rohr-in-Rohr-Lösung mit einer an einer vorbestimmten Stelle über ein Exemplar des Fittingsystems in die Gasleitung eingeführten und vorzugsweise an einer anderen vorbestimmten Stelle mittels eines weiteren Exemplars des Fittingsystems aus der Gasleitung heraus geführten Glasfasertransportleitung, durch die sich dann die Glasfaserleitungen verlegen lassen. Entsprechend wird die zuvor genannte Aufgabe erfindungsgemäß weiterhin gelöst durch die Verwendung des zuvor beschriebenen Fittingsystems oder des zuvor beschriebenen Systems zum Verlegen einer Glasfasertransportleitung in einer Gasleitung. Vorzugsweise wird das Fittingsystem bzw. das System für eine FTTC-Verlegung verwendet (fibre to the curb).

Weiterhin wird die zuvor beschriebene Aufgabe erfindungsgemäß gelöst durch ein Verfahren zum Verlegen einer Glasfasertransportleitung unter Verwendung des zuvor beschriebenen Systems, bei dem an einer Unterbrechungsstelle der Gasleitung mit zwei gegenüberliegenden Enden der Gasleitung die Glasfasertransportleitung derart positioniert wird, dass die Glasfasertransportleitung durch den Durchgangskanal des Abzweigverschlusses, durch den Abzweigkanal und den Kanal des Formkörpers und in eines der gegenüberliegenden Enden der Gasleitung verläuft, bei dem das erste und das zweite Ende des Rohrabschnitts jeweils mit einem Ende der beiden gegenüberliegenden Enden der Gasleitung verbunden werden und bei dem die Abzweigöffnung des Abzweigstutzens mit dem Abzweigverschluss verschlossen wird. Die Unterbrechungsstelle der Gasleitung kann bei dem Verfahren insbesondere dadurch bereitgestellt werden, dass in einer Gasleitung zunächst das Gas abgestellt wird, insbesondere mittels vorgesehener Armaturen wie Absperrventilen oder alternativer Methoden (z.B. Blasensetzen), und die Gasleitung anschließend inertisiert und zum Einbau des Formkörpers aufgetrennt wird. Das Verfahren kann insbesondere für die Verlegung von Glasfasertransportleitung für eine FTTC-Verlegung verwendet werden.

Das Fittingsystem ist zur Einführung einer Glasfasertransportleitung in eine Gasleitung vorgesehen. Das System umfasst eine solche Glasfasertransportleitung. Bei der Glasfasertransportleitung kann es sich beispielsweise um ein sogenanntes Mikrorohr handeln, das üblicherweise zur Verlegung von Glasfaserleitungen verwendet wird. Weiterhin kann es sich bei der Glasfasertransportleitung auch um ein Rohrbündel handeln, insbesondere um ein Mikrorohrbündel. Ein solches Mikrorohrbündel kann eine Mehrzahl von Mikrorohren umfassen, die zum Beispiel durch ein die Mikrorohre umgebendes Mantelrohr fest gebündelt werden. Die Glasfasertransportleitung besteht, zumindest außen, vorzugsweise aus thermoplastischem Kunststoff, beispielsweise aus Polyethylen (PE), insbesondere aus hochdichtem Polyethylen (PE-HD).

Gegenüber der direkten Einführung von Glasfaserleitungen in eine Gasleitung hat die Einführung einer Glasfasertransportleitung verschiedene Vorteile:
Mit der Glasfasertransportleitung und dem daran angepassten Fittingsystem lässt sich eine sehr gute Abdichtung zwischen Gasleitung, Fittingsystem und
Glasfasertransportleitung erreichen, so dass ein Gasleck an der Einführstelle der Glasfasertransportleitung zuverlässig verhindert werden kann.

Insbesondere können die direkten Arbeiten an der Gasleitung, insbesondere deren Abdichtung mit den damit verbundenen Drucktests, unabhängig vom Verlegen der Glasfaserleitung erfolgen. Dies ermöglicht es, dass die Glasfasertransportleitungen zum Beispiel von einem für Arbeiten an Gasleitungen spezialisierten Unternehmen, beispielsweise dem lokalen Gasnetzbetreiber, verlegt werden und das Verlegen, insbesondere Einblasen, der Glasfaserleitungen dann durch ein anderes, hierauf spezialisiertes Unternehmen, beispielsweise durch einen Telekommunikationsdienstleister, durchgeführt werden kann, ohne dass dieses andere Unternehmen für Arbeiten an Gasleitungen spezialisiert sein müsste.

Weiterhin vereinfacht das Verlegen einer Glasfasertransportleitung das Verlegen der Glasfaserleitung selbst. Indem sich die Glasfasertransportleitung durch das Fittingsystem in die Gasleitung ein- bzw. ausführen lässt, kann die Glasfasertransportleitung beispielsweise um Absperrarmaturen in der Gasleitung herum verlegt werden. Insbesondere kann mit der Glasfasertransportleitung ein Kanal mit im Wesentlichen gleichbleibendem Querschnitt und ohne in den Kanal hineinragende Hindernisse zur Verfügung gestellt werden, wodurch insbesondere das Einblasen von Glasfaserleitungen sehr vereinfacht wird.

Das Fittingsystem umfasst einen Formkörper mit einem Rohrabschnitt, der ein erstes und ein zweites Ende zum jeweiligen Anschließen an eine Gasleitung aufweist. Vorzugsweise ist der Rohrabschnitt im Wesentlichen gerade ausgeführt, wodurch die Installation in einen insbesondere bestehenden, geraden Leitungsabschnitt der Gasleitung erleichtert wird. Der Rohrabschnitt oder zumindest das erste und zweite Ende des Rohrabschnitts weisen vorzugsweise einen Innendurchmesser auf, der an den Außendurchmesser einer standardisierten Gasleitung, beispielsweise einer DN 100 oder DN 150 Leitung angepasst ist. Auf diese Weise kann ein jeweiliges Ende durch Aufschieben auf ein Ende der Gasleitung mit der Gasleitung verbunden werden.

Der Rohrabschnitt umgibt einen von dem ersten zum zweiten Ende verlaufenden, vorzugsweise geraden Kanal, sodass ein möglichst ungestörter Gasfluss in der Gasleitung gewährleistet wird.

Der Formkörper weist weiterhin einen seitlich von dem Rohrabschnitt abgehenden Abzweigstutzen auf, der einen von dem Kanal zu einer Abzweigöffnung verlaufenden Abzweigkanal umgibt. Dieser Abzweigstutzen dient dazu, eine Glasfasertransportleitung in den in die Gasleitung zu installierenden Rohrabschnitt hineinzuführen. Vorzugsweise sind der Rohrabschnitt und der Abzweigstutzen aus einem Stück gefertigt, beispielsweise durch Spritzguss, um die Dichtheit des Formkörpers zu gewährleisten. Der Abzweigkanal geht vorzugsweise ohne Querschnittsverengung in den Kanal über. Dies vereinfacht das Einfädeln der Glasfasertransportleitung durch den Abzweigkanal und den Kanal des Rohrabschnitts.

Das Fittingsystem weist weiterhin einen an den Abzweigstutzen angepassten Abzweigverschluss zum Verschließen der Abzweigöffnung auf, wobei der Abzweigverschluss einen Durchgangskanal zum Hindurchführen einer Glasfasertransportleitung aufweist. Der Abzweigverschluss dient zum Verschließen der Abzweigöffnung, um einen Gasaustritt zu verhindern. Der Durchgangskanal im Abzweigverschluss ist für das Hindurchführen einer Glasfasertransportleitung vorgesehen. Auf diese Weise kann im installierten Zustand, wenn eine Glasfasertransportleitung durch den Durchgangskanal geführt und der Abzweigverschluss mit dem Abzweigstutzen verbunden ist, eine gasdichte Einführung der Glasfasertransportleitung in die Gasleitung erreicht werden.

Die Größe des Durchgangskanals ist vorzugsweise an die Größe einer typischen, insbesondere standardisierten Glasfasertransportleitung, beispielsweise eines Einzelmikrorohrs oder eines Mikrorohrbündels, angepasst. Der Durchmesser des Kanals kann zum Beispiel im Bereich von 5 bis 50 mm, insbesondere 10 bis 20 mm, liegen.

Durch das Vorsehen eines vom Abzweigverschluss separaten Formkörpers kann der Formkörper für einzuführende Glasfasertransportleitungen mit verschiedenen Außendurchmessern verwendet werden, indem zu dem Formkörper ein jeweils geeigneter Abzweigverschluss mit einem passenden Durchgangskanal-Innendurchmesser ausgewählt wird. Dieser modulare Aufbau des Fittingsystems erleichtert die Montage und reduziert die Kosten, da dieselbe Formkörper-Größe für verschiedene Verlegesituationen verwendet werden kann. Entsprechend kann das Fittingsystem insbesondere auch eine Mehrzahl an Abzweigverschlüssen mit verschiedenen Durchgangskanal-Innendurchmessern umfassen, so dass der für eine konkrete Verlegesituation geeignete Abzweigverschluss dann aus der Mehrzahl an Abzweigverschlüssen ausgewählt werden kann.

Im Folgenden werden verschiedenen Ausführungsformen des Fittingsystems, des Systems, der Verwendung, und des Verfahrens beschrieben, wobei die einzelnen Ausführungsformen jeweils individuell für das Fittingsystem, das System, die Verwendung und das Verfahren anwendbar sind. Weiterhin können die Ausführungsformen auch untereinander kombiniert werden.

Erfindungsgemäß ist der Abzweigverschluss in Form eines Abzweigstopfens ausgebildet mit einem Einführteil, das dazu vorgesehen ist, in den Abzweigkanal des Abzweigstutzens eingeführt zu werden, und dessen Außenkontur an die Innenkontur des Abzweigstutzens angepasst ist. Auf diese Weise kann der Abzweigverschluss mit dem Einführteil in den Abzweigstutzen eingeführt werden, wodurch sich eine bessere Abdichtung zwischen dem Abzweigverschluss und dem Abzweigstutzen erreichen lässt.

Erfindungsgemäß weist der Abzweigverschluss ein Mantelteil auf, das dazu vorgesehen ist, über den Abzweigstutzten gestülpt zu werden, und dessen Innenkontur an die Außenkontur des Abzweigstutzens angepasst ist.

Besonders bevorzugt weist der Abzweigverschluss sowohl ein Einführteil als auch ein Mantelteil auf. Insbesondere kann zwischen dem Einführteil und dem Manteilteil eine Aufnahmenut ausgebildet sein, in die das Ende des Abzweigstutzens beim Aufsetzen des Abzweigverschlusses auf den Abzweigstutzen eingeführt wird. Dies erleichtert die Positionierung des Abzweigverschlusses auf dem Abzweigstutzen.

Um die Positionierung des Abzweigverschlusses am Abzweigstutzen zu vereinfachen, kann in dem Abzweigkanal ein Anschlagsteg vorgesehen sein, der die Einschubtiefe des Abzweigverschlusses, insbesondere des Einführteils, in den Abzweigstutzen begrenzt.

Bei einer weiteren Ausführungsform sind der Formkörper und der Abzweigverschluss aus Kunststoff hergestellt, insbesondere aus einem thermoplastischen Kunststoff. Beispielsweise können der Formkörper und Abzweigverschluss aus Polyethylen (PE), insbesondere aus hochdichtem Polyethylen (PE-HD) wie zum Beispiel PE 100 oder PE RC hergestellt sein.

Bei einer weiteren Ausführungsform ist am ersten und/oder am zweiten Ende des Rohrabschnitts ein Heizwendeldraht zur Herstellung einer Heizwendelschweißung zwischen dem Rohrabschnitt und einer Gasleitung vorgesehen. Zu diesem Zweck ist das betreffende Ende des Rohrabschnitts, vorzugsweise der gesamte Formkörper, aus einem thermoplastischen Kunststoff ausgebildet. Der Heizwendeldraht ist insbesondere in den Kunststoff eingebettet. Weiterhin sind am Formkörper insbesondere Anschlusselektroden zur Beaufschlagung des Heizwendeldrahts mit elektrischem Strom vorgesehen. Bei einer entsprechenden Ausführungsform des Verfahrens werden das erste und/oder das zweite Ende des Rohrabschnitts durch Heizwendelschweißen mit dem jeweiligen Ende der Gasleitung verschweißt.

Die Technik des Heizwendelschweißens ist grundsätzlich bekannt und bedarf daher an dieser Stelle keiner detaillierten Erläuterung. Vom Prinzip her dient das Heizwendelschweißen zum formschlüssigen Verbinden zweier Werkstücke aus thermoplastischem Kunststoff, wobei in einem der Werkstücke ein Heizwendeldraht eingebettet ist, der über vorgesehene Elektroden mit einem elektrischen Strom beaufschlagt werden kann. Bei der Durchführung des Heizwendelschweißens wird der Heizwendeldraht mit einem elektrischen Strom beaufschlagt, sodass sich dieser erwärmt und das thermoplastische Material des entsprechenden Werkstücks erweicht. Hierdurch kommt es zu einer stoffschlüssigen Verbindung mit dem anderen Werkstück. Auf diese Weise kann eine flächige und dichte, insbesondere gasdichte, Verbindung erreicht werden.

Durch das Vorsehen eines Heizwendeldrahts zur Herstellung einer Heizwendelschweißung am ersten und/oder am zweiten Ende des Rohrabschnitts wird die sichere und gasdichte Installation des Formkörpers in die Gasleitung deutlich erleichtert.

Erfindungsgemäß ist am Abzweigstutzen und/oder am Einführteil ein Heizwendeldraht zur Herstellung einer Heizwendelschweißung zwischen Abzweigstutzen und Abzweigverschluss vorgesehen. Auf diese Weise kann der Abzweigverschluss nach dem Aufsetzen auf den Abzweigstutzen stoffschlüssig mit diesem derart verbunden werden, dass eine zuverlässig dauerhaft gasdichte Verbindung hergestellt wird. Der Heizwendeldraht kann insbesondere im Bereich der Innenkontur des Abzweigstutzens vorgesehen sein, der dem Einführteil im installierten Zustand gegenüber liegt.

Bei einer weiteren Ausführungsform ist am Durchgangskanal des Abzweigverschlusses ein Heizwendeldraht zur Herstellung einer Heizwendelschweißung zwischen dem Abzweigstopfen und einer Glasfasertransportleitung vorgesehen. Auf diese Weise kann die Glasfasertransportleitung, nachdem sie bei der Installation durch den Durchgangskanal des Abzweigverschlusses geführt wurde, stoffschlüssig mit diesem verbunden werden, um eine gasdichte Verbindung zwischen Durchgangskanal und Glasfasertransportleitung zu schaffen. Diese Ausgestaltung zeigt besonders den Vorteil der Verlegung einer Glasfasertransportleitung anstelle der unmittelbaren Verlegung von Glasfaserleitungen, da eine stoffschlüssige Verbindung zwischen Abzweigverschluss und Glasfaserleitung bzw. einem Glasfaserleitungsbündel, insbesondere mittels Heizwendelverschweißen, nicht möglich wäre.

Vorzugsweise ist sowohl am Abzweigstutzen und/oder am Abzweigverschluss als auch am Durchgangskanal des Abzweigverschlusses jeweils ein Heizwendeldraht zur Herstellung einer jeweiligen Heizwendelschweißung vorgesehen. Auf diese Weise lässt sich eine dauerhaft gasdichte Einführung der Glasfasertransportleitung in eine Gasleitung erreichen.

Bei einer entsprechenden Ausführungsform des Verfahrens werden der Abzweigverschluss mit dem Abzweigstutzen und/oder der Abzweigstutzen mit der Glasfasertransportleitung durch Heizwendelschweißen verschweißt.

Die vorgesehenen Heizwendeldrähte am ersten und/oder zweiten Ende des Rohrabschnitts beziehungsweise am Abzweigstutzen können jeweilige Elektroden aufweisen, so dass die einzelnen Heizwendelschweißvorgänge nacheinander durchgeführt werden können. Alternativ können auch Elektroden für mehrere der Heizwendeldrähte vorgesehen sein, sodass durch Kontaktierung eines Elektrodenpaars Heizwendelschweißungen an verschiedenen Stellen gleichzeitig durchgeführt werden können. Dies reduziert die erforderlichen Arbeitsschritte und verhindert, dass eine Schweißung versehentlich vergessen wird.

Entsprechend ist an dem Abzweigverschluss vorzugsweise ein Elektrodenpaar für den Heizwendeldraht zur Herstellung einer Heizwendelschweißung zwischen dem Rohrabschnitt und einer Gasleitung und für den Heizwendeldraht zur Herstellung einer Heizwendelschweißung zwischen dem Abzweigstopfen und einer Glasfasertransportleitung vorgesehen.

Erfindungsgemäß sind am Abzweigverschluss und am Abzweigstutzen zueinander korrespondierende Verbindungsmittel, insbesondere zueinander korrespondierende Gewinde, zur Herstellung einer kraft- und/oder formschlüssigen Verbindung zwischen Abzweigstutzen und Abzweigverschluss vorgesehen. Beispielsweise kann am Abzweigstutzen ein Außengewinde und an einem Mantelteil des Abzweigverschlusses ein dazu korrespondierendes Innengewinde vorgesehen sein, sodass der Abzweigverschluss auf den Abzweigstutzen aufgeschraubt werden kann. Dies ermöglicht eine provisorische Befestigung des Abzweigverschlusses auf dem Abzweigstutzen vor der Herstellung der stoffschlüssigen Verbindung.

Weiterhin kann eine solche kraft- und/oder formschlüssige Verbindung auch für eine provisorische Installation für eine Übergangszeit ausreichend sein. Zu diesem Zweck sind am Abzweigstutzen und/oder am Abzweigverschluss vorzugsweise weiterhin Dichtmittel, beispielsweise Dichtringe vorgesehen, um auch bei einer rein kraft- und/oder formschlüssigen Verbindung zumindest übergangsweise eine gasdichte Verbindung erreichen zu können.

Bei einer weiteren Ausführungsform liegt der Winkel zwischen dem Rohrabschnitt und dem Abzweigstutzen im Bereich 5° bis 60°, vorzugsweise im Bereich 15° bis 45°. Beispielsweise kann der Winkel zwischen dem Rohrabschnitt und dem Abzweigstutzen bei etwa 30° liegen. Auf diese Weise kann im installierten Zustand ein Krümmungsradius der Glasfasertransportleitung erreicht werden, der sich als geeignet herausgestellt hat, um eine Glasfaserleitung in die Glasfasertransportleitung einzublasen. Bei einem Winkel von mehr als 45° und insbesondere mehr als 60° ist der Biegeradius der Glasfasertransportleitung sehr bzw. gegebenenfalls zu klein, wodurch das Einblasen der Glasfaserleitung erschwert wird und gegebenenfalls vorgeschriebene Krümmungsradien für die Glasfaserverlegung nicht eingehalten werden können. Bei Winkeln von weniger als 15° oder sogar weniger als 5° wird die Installation des Formkörpers in der Gasleitung unnötig erschwert.

Bei einer weiteren Ausführungsform umfasst das System weiterhin eine Materialübergangsmuffe mit einer ersten Seite aus einem thermoplastischen Kunststoff zum Anschluss an den Rohrabschnitt des Formkörpers oder an ein Zwischenleitungsstück aus thermoplastischem Kunststoff und mit einer zweiten Seite aus einem anderen Material zum Anschluss an eine Gasleitung.

Moderne Gasleitungen bestehen typischerweise aus einem thermoplastischen Kunststoff, insbesondere aus Polyethylen, sodass derartige Gasleitungen direkt mittels Heizwendelschweißen mit dem Formkörper gasdicht verbunden werden können.

Es existieren jedoch auch Leitungen aus nicht-thermoplastischem Kunststoff, insbesondere aus PVC, oder auch aus Metall, beispielsweise aus Stahl. Um auch bei derartigen Gasleitungen ein entsprechendes Fittingsystem mittels Heizwendelschweißen installieren zu können, sind die Materialübergangsmuffen vorgesehen, die einerseits eine Anbindung an die Gasleitung und andererseits eine Anbindung an den Formkörper des Fittingsystems mittels Heizwendelschweißen ermöglichen.

Bei einer weiteren Ausführungsform umfasst das System weiterhin ein selbsttätig schließendes Sicherheitsventil für das Glasfaserleitungsrohr. Bei einer entsprechenden Ausführungsform des Verfahrens wird ein selbsttätig schließendes Sicherheitsventil in das Glasfaserleitungsrohr installiert, und zwar insbesondere außerhalb der Gasleitung und des Formkörpers. Durch das Vorsehen eines selbsttätig schließendes Sicherheitsventil, beispielsweise eines Schnellverschlussventils, kann verhindert werden, dass bei einem Leck des Glasfaserleitungsrohrs innerhalb der Gasleitung, beispielsweise aufgrund einer Beschädigung des Glasfaserleitungsrohrs bei Tiefbauarbeiten, Gas aus der Gasleitung unkontrolliert durch das Glasfaserleitungsrohr ausströmen kann.

Weitere Merkmale und Vorteile des Fittingsystems, des Systems, deren Verwendung und des Verfahrens ergeben sich aus der nachfolgenden Beschreibung von Ausführungsbeispielen, wobei auf die beigefügte Zeichnung Bezug genommen wird.

### In der Zeichnung zeigen

- Fig. 1a-b: ein Ausführungsbeispiel des Systems mit einem Ausführungsbeispiel des Fittingsystems,
- Fig. 2a-e: ein Ausführungsbeispiel des Verfahrens,
- Fig. 3: ein weiteres Ausführungsbeispiel des Systems und
- Fig. 4: ein weiteres Ausführungsbeispiel des Systems.

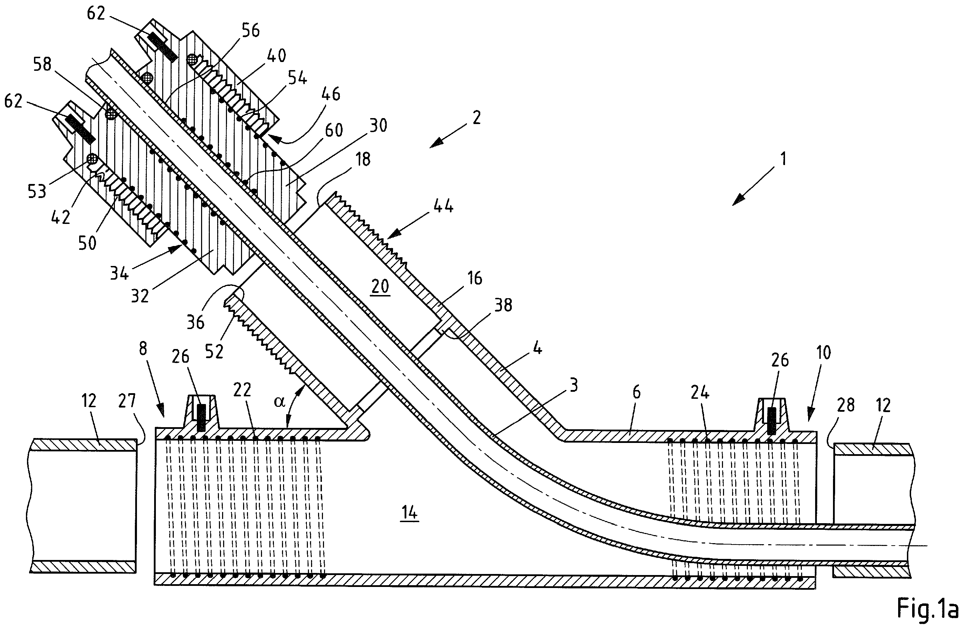

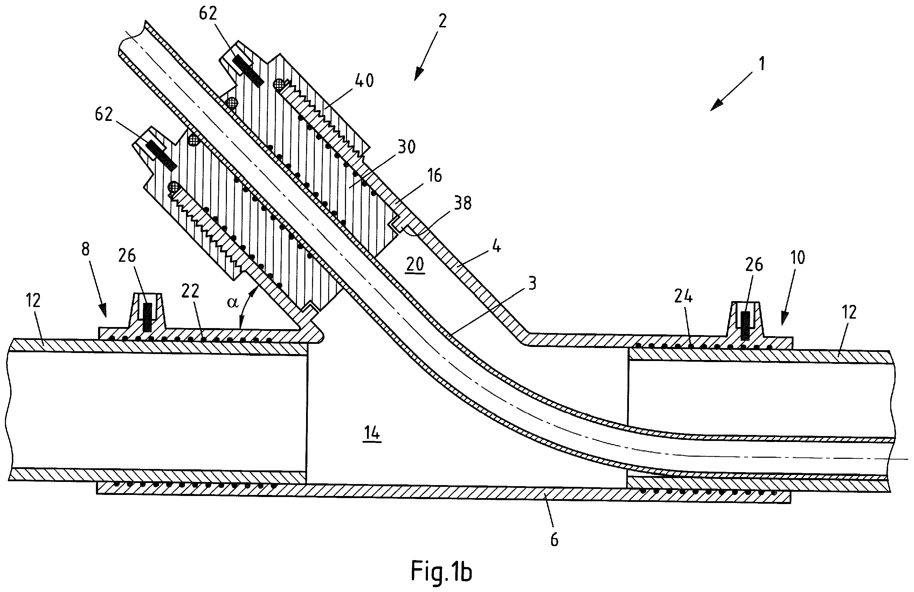

Die Figur 1a-b zeigen in Querschnittsdarstellung ein Ausführungsbeispiel des Systems und des Fittingsystems. Fig. 1a zeigt den Zustand vor Fertigstellung der Installation und Fig. 1b zeigt den installierten Zustand. Das System 1 umfasst das Fittingsystem 2 und eine Glasfasertransportleitung 3.

Das Fittingsystem 2 umfasst wiederum einen Formkörper 4 mit einem Rohrabschnitt 6, der ein erstes Ende 8 und ein zweites Ende 10 zum jeweiligen Anschließen an eine Gasleitung 12 aufweist, wobei der Rohrabschnitt 6 einen von dem ersten Ende 6 zum zweiten Ende 8 verlaufenden Kanal 14 umgibt. Der Formkörper 4 weist weiterhin einen seitlich von dem Rohrabschnitt 6 abgehenden Abzweigstutzen 16 auf, der einen von dem Kanal 14 zu einer Abzweigöffnung 18 verlaufenden Abzweigkanal 20 umgibt. Der Winkel α zwischen dem geraden Rohrabschnitt 6 und dem Abzweigstutzen 16 liegt vorzugsweise bei etwa 30°. Auf diese Weise wird im installierten Zustand wie in Fig. 1b dargestellt ein günstiger Krümmungsradius der Glasfasertransportleitung 3 erreicht. Der Formkörper 4 ist einstückig aus hochdichtem Polyethylen, beispielsweise PE 100, hergestellt.

Am ersten und zweiten Ende 8, 10 des Rohrabschnitts 6 sind jeweils Heizwendeldrähte 22, 24 in die Kunststoffwandung des Rohrabschnitts 6 eingebettet, wobei die jeweiligen Enden der Heizwendeldrähte 22, 24 in Reihe oder parallel mit einem Paar Anschlusselektroden 26 verbunden sind. Auf diese Weise kann das erste bzw. zweite Ende 8, 10 des Rohrabschnitts 6 mittels Heizwendelschweißen mit einem jeweiligen Ende einer Gasleitung, beispielsweise mit den in Fig. 1a-b dargestellten jeweiligen gegenüberliegenden Enden 27, 28 der Gasleitung 12, stoffschlüssig verbunden werden. Dadurch kann eine dauerhaft gasdichte Verbindung zwischen der Gasleitung 12 und dem Formkörper 4 hergestellt werden.

Weiterhin umfasst das Fittingsystem 2 einen an den Abzweigstutzen 16 des Formkörpers 4 angepassten Abzweigverschluss 30 in Form einen Abzweigstopfens zum Verschließen der Abzweigöffnung 18. Der Abzweigverschluss 30 weist ein Einführteil 32 zum Einführen in den Abzweigkanal 20 auf, dessen Außenkontur 34 an die Innenkontur 36 des Abzweigkanals 20 angepasst ist. Ein in den Abzweigkanal angeordneter Anschlagsteg 38 dient dazu, die Einführtiefe des Abzweigverschlusses 30 in den Abzweigkanal 20 zu begrenzen.

Der Abzweigverschluss 30 weist weiterhin ein Mantelteil 40 auf, dessen Innenkontur 42 an die Außenkontur 44 des Abzweigstutzens 16 angepasst ist. Zwischen dem Einführteil 32 und dem Mantelteil 40 ist eine Nut 46 ausgebildet, in die das Ende des Abzweigstutzens 16 beim Aufsetzen des Abzweigverschlusses 30 auf den Abzweigstutzen 16 eingeführt wird, wie es in Fig. 1b dargestellt ist.

An der Innenkontur 42 des Mantelteils 40 ist ein Innengewinde 50 und an der Außenseite des Abzweigstutzens 16 ein dazu korrespondierendes Außengewinde 52 angeordnet, sodass der Abzweigverschluss 30 mit dem Mantelteil 40 auf den Abzweigstutzen 16 aufgeschraubt werden kann. Weiterhin ist ein Dichtungsring 53 im Bereich der Nut 46 des Abzweigverschlusses 30 vorgesehen, um nach dem Aufschrauben des Abzweigverschlusses 30 auf den Abzweigstutzen 16 eine zumindest zeitweise gasdichte Verbindung erreichen zu können.

Zur Herstellung einer dauerhaft gasdichten Verbindung ist an der Außenkontur 34 des Einführteils 32 ein Heizwendeldraht 54 zur Herstellung einer Heizwendelschweißung zwischen dem Abzweigverschluss 30 und dem Abzweigstutzen 16 vorgesehen. Alternativ oder zusätzlich kann der Heizwendeldraht 54 auch im Abzweigstutzen 16 vorgesehen sein.

Der Abzweigverschluss 30 weist weiterhin einen Durchgangskanal 56 zum Hindurchführen der Glasfasertransportleitung 3 auf. Der Durchgangskanal 56 des Abzweigverschlusses 30 ist so dimensioniert, dass ein Mikrorohr, beispielsweise mit einem Durchmesser von 20 mm als Glasfasertransportleitung 3 durch den Durchgangskanal 56 hindurchgeführt werden kann.

Am Durchgangskanal 56 ist ein Dichtungsring 58 vorgesehen, um nach Hindurchführen der Glasfasertransportleitung 3 eine vorläufig dichte Verbindung bereitzustellen. Zur Herstellung einer dauerhaft gasdichten Verbindung weist der Abzweigverschluss 30 im Bereich des Durchgangskanals 56 zudem einen Heizwendeldraht 60 zur Herstellung einer Heizwendelschweißung zwischen Abzweigverschluss 30 und Glasfasertransportleitung 3 auf.

Zur Beaufschlagung des Heizwendeldrahts 54 und des Heizwendeldrahts 60 ist ein Paar Anschlusselektroden 62 vorgesehen, mit denen die Heizwendeldrähte 54 und 60 parallel oder in Reihe geschaltet sind.

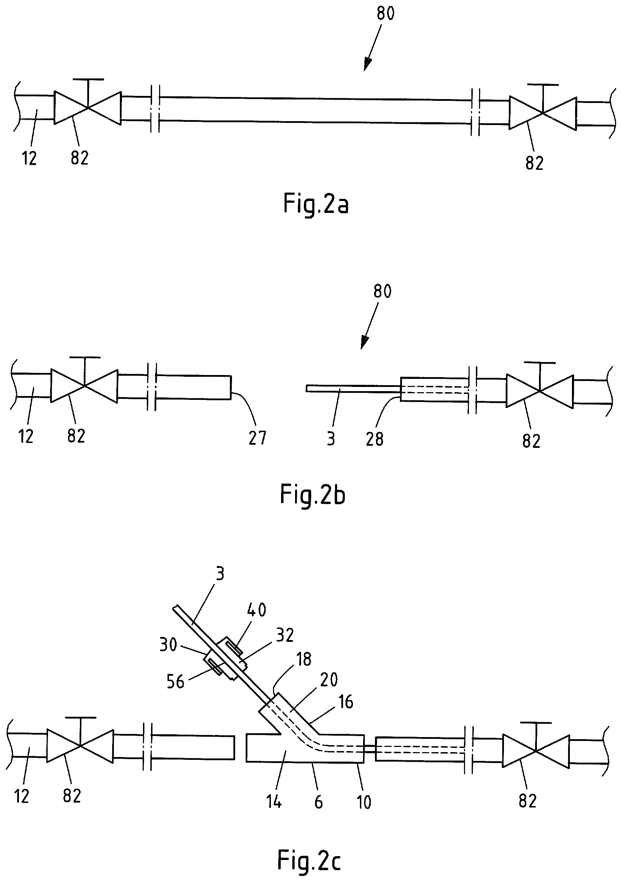

Die Installation des in Figur 1 dargestellten Systems 1 mit dem Fittingsystem 2 wird nun anhand der Figuren 2a-e erläutert.

Figur 2a zeigt die Gasleitung 12, in die an einem Einführungspunkt 80 von außen die Glasfasertransportleitung 3 eingeführt werden soll. Zu diesem Zweck wird über Streckenabsperrventile 82 vor unter hinter dem Einführungspunkt 80 zunächst der Gasstrom unterbrochen und der Bereich der Gasleitung 12 zwischen den Streckenabsperrventilen 82 inertisiert, sodass ein unkontrollierter Gasaustritt bei der Installation vermieden werden kann.

Die Gasleitung wird dann wie in Figur 2b gezeigt an dem vorgesehenen Einführungspunkt 80 getrennt, so dass sich die beiden gegenüberliegenden Enden 27 und 28 ergeben.

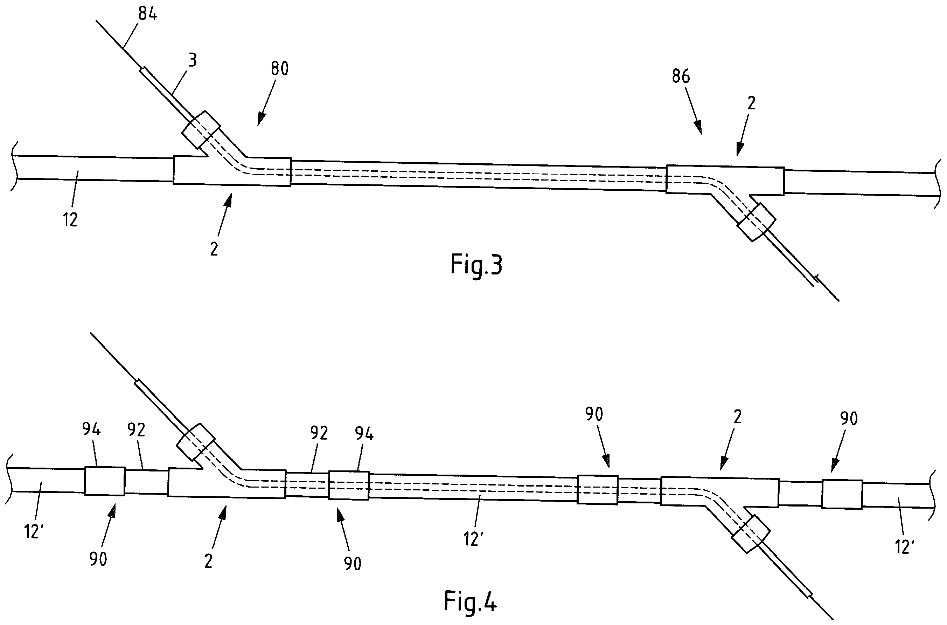

Zum Verlegen der Glasfasertransportleitung 3 kann dann zunächst, beispielsweise mittels eines motorbetriebenen Molchs, ein Zugdraht (nicht dargestellt) durch einen Abschnitt der Gasleitung 12 zwischen den beiden Streckenabsperrventilen 82 eingezogen und mit diesem Zugdraht dann wiederum die Glasfasertransportleitung 3 in die Gasleitung 12 eingezogen werden. Der zwischen dem Einführungspunkt 80 und dem rechten Streckenabsperrventil 82 angeordnete Ausführungspunkt 86 (vgl. Fig. 3) für die Glasfasertransportleitung 3 ist in Fig. 2a-e der Übersicht halber nicht dargestellt.

Der aus dem Ende 28 herausragende Teil der Glasfasertransportleitung 3 wird dann im nächsten in Fig. 2c dargestellten Schritt durch das zweite Ende 10 des Rohrabschnitts 6, den Kanal 14 und den Abzweigkanal 20 durch die Abzweigöffnung 18 geführt. Weiterhin wird die Glasfasertransportleitung 3 durch den Durchgangskanal 56 des Abzweigverschlusses 30 hindurch geführt.

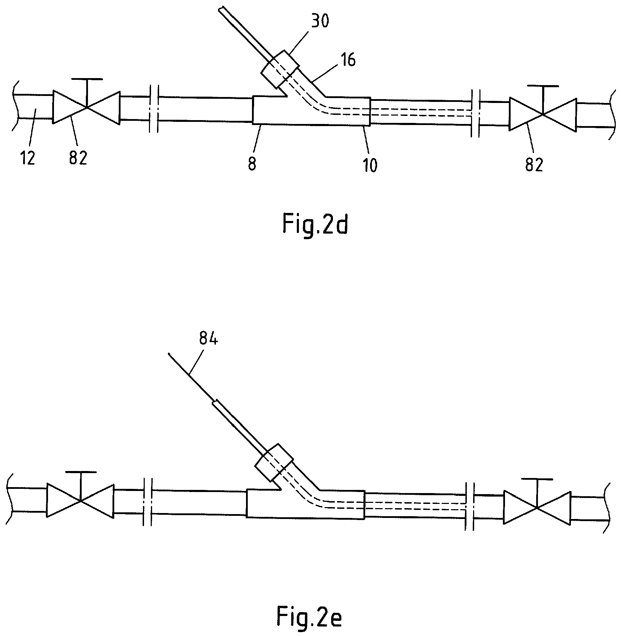

Der Formkörper 4 wird dann wie in Fig. 2d dargestellt mit den beiden Enden 8, 10 auf das jeweilige Ende 27, 28 der Gasleitung 12 aufgeschoben und der Abzweigverschluss 30 wird auf den Abzweigstutzen 16 aufgesetzt. Anschließend werden die Elektrodenpaare 26 und 62 (vgl. Fig. 1b) jeweils mit elektrischem Strom beaufschlagt, sodass das erste und zweite Ende 8, 10 des Formkörpers mit dem jeweiligen Ende 27, 28 der Gasleitung 12, der Abzweigverschluss 30 mit dem Abzweigstutzen 16 und mit der Glasfasertransportleitung 3 verschweißt wird. Auf diese Weise wird eine insgesamt gasdichte Verbindung erreicht, sodass die Absperrventile 82 nach Durchführung einer Druckprüfung wieder geöffnet werden können und die Gasversorgung durch die Gasleitung 12 wieder aufgenommen werden kann.

In die Glasfasertransportleitung 3 können dann beispielsweise zu einem späteren Zeitpunkt Glasfaserleitungen 84 wie in Fig. 2e dargestellt eingeblasen werden. Der Winkel von ca. 30° zwischen dem Rohrabschnitt 6 und dem Abzweigstutzen 16 erleichtert das Einblasen der Glasfaserleitungen 84, da auf diese Weise ein vorteilhafter Krümmungsradius der Glasfasertransportleitung 3 erreicht wird.

Durch die mit dem Fittingsystem 2 erreichte Rohr-in-Rohr-Lösung kann das Einblasen ohne Eingriff in den Versorgungsbetrieb der Gasleitung 12 erfolgen und ohne das Risiko eines Gaslecks bei der Installation.

Die Figuren 3 und 4 zeigen zwei verschiedene Ausführungsbeispiele für eine Installation des Systems bei verschiedenen Gasleitungstypen.

Figur 3 zeigt die Gasleitungen 12, in denen die Glasfaserleitungen 84 verlegt werden sollen, und zwar zwischen dem Einführungspunkt 80 und dem Einführungspunkt 86 (der auch aus Ausführungspunkt bezeichnet werden kann).

Zu diesem Zweck werden zwei Fittingsysteme 2 der in Figur 1a-b beschriebenen Art verwendet, wobei die Glasfasertransportleitung 3 durch eines der Fittingsysteme in die Gasleitung 12 eingeführt und durch das andere Fittingsystem 2 wieder aus der Gasleitung 12 herausgeführt wird.

Diese Installationsweise hat den Vorteil, dass lediglich am Einführungspunkt 80 und am Ausführungspunkt 86 Tiefbauarbeiten erforderlich sind und das Ausheben einer Baugrube entlang der zu verlegenden Strecke zwischen dem Einführungspunkt 80 und dem Ausführungspunkt 86 entfällt. Dadurch können insbesondere bei langen Überlandverbindungen erhebliche Kosten eingespart werden. Weiterhin wird der Planungsaufwand bei der Umsetzung von Verlegeprojekten reduziert. Ebenso sind aufwändige Trassierungs- und Genehmigungsverfahren entbehrlich, da für die Verlegung der Glasfasern bestehende Trassen verwendet werden können. Dies ist besonders vorteilhaft bei der Unterkreuzung von Bahntrassen oder Bundesstraßen.

Figur 4 zeigt eine vorteilhafte Einbausituation für den Fall, dass eine Gasleitung 12' aus PVC oder Stahl vorliegt, die nicht direkt mittels Heizwendelschweißen mit dem Rohrabschnitt 6 verbunden werden kann. Um auch in diesem Fall die in Figur 1a-b dargestellten Fittingsysteme 2 verwenden zu können, sind zusätzlich Materialübergangsmuffen 90 vorgesehen, die eine erste, dem jeweiligen Fittingsystem 2 zugewandte Seite 92 aus Polyethylen und eine zweite, dem jeweiligen Ende der Gasleitung 12' zugewandten Seite 94 aus Stahl oder PVC aufweisen, um eine gasdichte Verbindung mit der entsprechenden Gasleitung 12' herstellen zu können.

Wie zuvor dargestellt wurde, können durch die Verwendung des Fittingsystems 2 bzw. des Systems 1 zum Verlegen einer Glasfasertransportleitung in einer Gasleitung erhebliche Kosten beim Glasfaserausbau eingespart werden.

## Patentansprüche

1. Fittingsystem (2) zur Einführung einer Glasfasertransportleitung (3) in eine Gasleitung (12, 12'), umfassend:
- einen Formkörper (4)
- mit einem Rohrabschnitt (6), der ein erstes (8) und ein zweites Ende (10) zum jeweiligen Anschließen an eine Gasleitung (12, 12') aufweist, wobei der Rohrabschnitt (6) einen von dem ersten (8) zum zweiten Ende (10) verlaufenden Kanal (14) umgibt, und
- mit einem seitlich von dem Rohrabschnitt (6) abgehenden Abzweigstutzen (16), der einen von dem Kanal (14) zu einer Abzweigöffnung (18) verlaufenden Abzweigkanal (20) umgibt, und
- einen an den Abzweigstutzen (16) angepassten Abzweigverschluss (30) zum Verschließen der Abzweigöffnung (18), wobei der Abzweigverschluss (30) einen Durchgangskanal (56) zum Hindurchführen einer Glasfasertransportleitung (3) aufweist,
- wobei der Abzweigverschluss (30) in Form eines Abzweigstopfens ausgebildet ist mit einem Einführteil (32), das dazu vorgesehen ist, in den Abzweigkanal (20) des Abzweigstutzens (16) eingeführt zu werden, und dessen Außenkontur (34) an die Innenkontur (36) des Abzweigstutzens angepasst ist,
- wobei am Abzweigverschluss (30) und am Abzweigstutzen (16) zueinander korrespondierende Verbindungsmittel (50, 52) zur Herstellung einer kraft- und/oder formschlüssigen Verbindung zwischen Abzweigstutzen (16) und Abzweigverschluss (30) vorgesehen sind,
**dadurch gekennzeichnet,**
- **dass** der Abzweigverschluss (30) ein Mantelteil (40) aufweist, das dazu vorgesehen ist, über den Abzweigstutzten (16) gestülpt zu werden, und dessen Innenkontur (42) an die Außenkontur (44) des Abzweigstutzens (16) angepasst ist, und
- **dass** am Abzweigstutzen (16) und/oder am Einführteil (32) des Abzweigverschlusses ein Heizwendeldraht (54) zur Herstellung einer Heizwendelschweißung zwischen Abzweigstutzen (16) und Abzweigverschluss (30) vorgesehen ist.

2. Fittingsystem nach Anspruch 1,
**dadurch gekennzeichnet, dass** der Formkörper (4) und der Abzweigverschluss (30) aus Kunststoff hergestellt sind, insbesondere aus einem thermoplastischen Kunststoff.

3. Fittingsystem nach Anspruch 1 oder 2,
**dadurch gekennzeichnet, dass** am ersten (8) und/oder am zweiten Ende (10) des Rohrabschnitts (6) ein Heizwendeldraht (22, 24) zur Herstellung einer Heizwendelschweißung zwischen dem Rohrabschnitt (6) und einer Gasleitung (12) vorgesehen ist.

4. Fittingsystem nach einem der Ansprüche 1 bis 3,
**dadurch gekennzeichnet, dass** am Durchgangskanal (56) des Abzweigverschlusses (30) ein Heizwendeldraht (60) zur Herstellung einer Heizwendelschweißung zwischen dem Abzweigstopfen (30) und einer Glasfasertransportleitung (3) vorgesehen ist.

5. Fittingsystem nach einem der Ansprüche 1 bis 4,
**dadurch gekennzeichnet, dass** der Winkel (α) zwischen dem Rohrabschnitt (6) und dem Abzweigstutzen (16) im Bereich 5° bis 60°, vorzugsweise im Bereich 15° und 45° liegt.

6. System (1)
- mit einem Fittingsystem (2) nach einem der Ansprüche 1 bis 5 und
- mit einer Glasfasertransportleitung (3),
- wobei die Innenkontur des Durchgangskanals (56) an die Außenkontur der Glasfasertransportleitung (3) angepasst ist.

7. System nach Anspruch 6,
weiter umfassend eine Materialübergangsmuffe (90) mit einer ersten Seite (92) aus einem thermoplastischen Kunststoff zum Anschluss an den Rohrabschnitt (6) des Formkörpers (4) oder an ein Zwischenleitungsstück aus thermoplastischem Kunststoff und mit einer zweiten Seite (94) aus einem anderen Material zum Anschluss an eine Gasleitung (12').

8. Verwendung eines Fittingsystems (2) nach einem der Ansprüche 1 bis 5 oder eines Systems (1) nach Anspruch 6 oder 7 zum Verlegen einer Glasfasertransportleitung (3) in einer Gasleitung (12, 12').

9. Verfahren zum Verlegen einer Glasfasertransportleitung (3) unter Verwendung eines Systems (1) nach Anspruch 6 oder 7,
- bei dem an einer Unterbrechungsstelle der Gasleitung (12) mit zwei gegenüberliegenden Enden (27, 28) der Gasleitung (12) die Glasfasertransportleitung (3) derart positioniert wird, dass die Glasfasertransportleitung (3) durch den Durchgangskanal (56) des Abzweigverschlusses (30), durch den Abzweigkanal (20) und den Kanal (14) des Formkörpers (4) und in eines der gegenüberliegenden Enden (27, 28) der Gasleitung (12) verläuft,
- bei dem das erste (8) und das zweite Ende (10) des Rohrabschnitts (6) jeweils mit einem Ende der beiden gegenüberliegenden Enden (27, 28) der Gasleitung (12) verbunden werden und
- bei dem die Abzweigöffnung (18) des Abzweigstutzens (16) mit dem Abzweigverschluss (30) verschlossen wird.

10. Verfahren nach Anspruch 9,
**dadurch gekennzeichnet, dass** das erste (8) und/oder das zweite Ende (10) des Rohrabschnitts (6) durch Heizwendelschweißen mit dem jeweiligen Ende (27, 28) der Gasleitung (12) verschweißt wird.

11. Verfahren nach Anspruch 9 oder 10,
**dadurch gekennzeichnet, dass** der Abzweigverschluss (30) mit dem Abzweigstutzen (16) und/oder der Abzweigstutzen (16) mit der Glasfasertransportleitung (3) durch Heizwendelschweißen verschweißt wird.

## Claims

1. Fitting system (2) for introducing an optical fibre transport line (3) into a gas line (12, 12'), comprising:
- a shaped body (4)
- having a pipe section (6) which has a first (8) and a second end (10) respectively for connection to a gas line (12, 12'), wherein the pipe section (6) surrounds a duct (14) running from the first (8) to the second end (10), and
- having a branch pipe end (16) extending laterally from the pipe section (6) and surrounding a branch duct (20) extending from the duct (14) to a branch opening (18), and
- a branch closure (30) adapted to the branch pipe end (16) for closing the branch opening (18), wherein the branch closure (30) has a through channel (56) for passing an optical fibre transport line (3) therethrough,
- wherein the branch closure (30) is configured in the form of a branch plug having an insertion part (32) which is provided to be inserted into the branch duct (20) of the branch pipe end (16) and the outer contour (34) of which is adapted to the inner contour (36) of the branch pipe end,
- wherein connecting means (50, 52) corresponding to one another are provided on the branch closure (30) and on the branch pipe end (16) to produce a force-fitting and/or form-fitting connection between the branch pipe end (16) and the branch closure (30),
**characterised in that**
- the branch closure (30) has a cover part (40) which is provided to be slipped over the branch pipe end (16) and the inner contour (42) of which is adapted to the outer contour (44) of the branch pipe end (16), and
- a heating coil wire (54) is provided on the branch pipe end (16) and/or on the insertion part (32) of the branch closure for producing a heating coil weld between the branch pipe end (16) and the branch closure (30).

2. Fitting system according to claim 1, **characterised in that** the shaped body (4) and the branch closure (30) are made of plastic, in particular a thermoplastic.

3. Fitting system according to claim 1 or 2, **characterised in that** a heating coil wire (22, 24) is provided on the first (8) and/or on the second end (10) of the pipe section (6) for producing a heating coil weld between the pipe section (6) and a gas line (12).

4. Fitting system according to any one of claims 1 to 3, **characterised in that** a heating coil wire (60) is provided on the through channel (56) of the branch closure (30) for producing a heating coil weld between the branch plug (30) and an optical fibre transport line (3).

5. Fitting system according to any one of claims 1 to 4, **characterised in that** the angle (α) between the pipe section (6) and the branch pipe end (16) is in the range of 5° to 60°, preferably in the range of 15° to 45°.

6. System (1)
- having a fitting system (2) according to any one of claims 1 to 5 and
- having an optical fibre transport line (3),
- wherein the inner contour of the through channel (56) is adapted to the outer contour of the optical fibre transport line (3).

7. System according to claim 6, further comprising a material transition sleeve (90) having a first side (92) made of a thermoplastic for connection to the pipe section (6) of the shaped body (4) or to an intermediate pipe section made of a thermoplastic and having a second side (94) made of another material for connection to a gas line (12').

8. Use of a fitting system (2) according to any one of claims 1 to 5 or a system (1) according to claim 6 or 7 for placing an optical fibre transport line (3) in a gas line (12, 12').

9. Method for placing an optical fibre transport line (3) by using a system (1) according to claim 6 or 7,
- in which, at a break point in the gas line (12) with two opposite ends (27, 28) of the gas line (12), the optical fibre transport line (3) is positioned in such a way that the optical fibre transport line (3) passes through the through channel (56) of the branch closure (30), through the branch duct (20) and the duct (14) of the shaped body (4) and into one of the opposite ends (27, 28) of the gas line (12),
- in which the first (8) and the second end (10) of the pipe section (6) are each connected to one end of the two opposite ends (27, 28) of the gas line (12), and
- in which the branch opening (18) of the branch pipe end (16) is closed with the branch closure (30).

10. Method according to claim 9, **characterised in that** the first (8) and/or the second end (10) of the pipe section (6) is welded to the respective end (27, 28) of the gas line (12) by means of a heating coil weld.

11. Method according to claim 9 or 10, **characterised in that** the branch closure (30) is welded to the branch pipe end (16) and/or the branch pipe end (16) is welded to the optical fibre transport line (3) by means of a heating coil weld.

## Revendications

1. Système de raccord (2) pour l'introduction d'une ligne de transport en fibre optique (3) dans une conduite de gaz (12, 12'), comportant:
- un corps moulé (4)
- avec une section tubulaire (6) qui présente une première (8) et une deuxième extrémité (10) pouvant être respectivement raccordées à une conduite de gaz (12,12'), la section tubulaire (6) entourant un canal (14) s'étendant de la première (8) vers la deuxième extrémité (10), et
- avec un embout de dérivation (16) partant latéralement de la section tubulaire (6), l'embout entourant un canal de dérivation (20) allant du canal (14) vers une ouverture de dérivation (18), et
- une fermeture de dérivation (30) adaptée à l'embout de dérivation (16) pour fermer l'ouverture de dérivation (18), où la fermeture de dérivation (30) présente un canal traversant (56) pour le passage d'une ligne de transport en fibre optique (3),
- où la fermeture de dérivation (30) est conçue sous forme d'un bouchon de dérivation avec un élément d'insertion (32) destiné à être inséré dans le canal de dérivation (20) de l'embout de dérivation (16) et dont le contour extérieur (34) est adapté au contour intérieur (36) de l'embout de dérivation,
- où des moyens de raccordement (50, 52) correspondant l'un à l'autre sont prévus au niveau de la fermeture de dérivation (30) et au niveau de l'embout de dérivation (16) pour établir une connexion par liaison de forme et/ou de force entre les embouts de dérivation (16) et la fermeture de dérivation (30),
**caractérisé**
- **en ce que** la fermeture de dérivation (30) présente un élément de type manchon (40) qui est prévu pour être enfilé sur l'embout de dérivation (16), et dont le contour intérieur (42) est adapté au contour extérieur (44) de l'embout de dérivation (16), et
- **en ce qu'**un filament chauffant (54) est prévu au niveau de l'embout de dérivation (16) et/ou au niveau de l'élément d'insertion (32) de la fermeture de dérivation pour établir un soudage par filament chauffant entre l'embout de dérivation (16) et la fermeture de dérivation (30).

2. Système de raccord selon la revendication 1,
**caractérisé en ce que** le corps moulé (4) et la fermeture de dérivation (30) sont fabriqués en matière synthétique, notamment en une matière synthétique thermoplastique.

3. Système de raccord selon la revendication 1 ou 2,
**caractérisé en ce qu'**un filament chauffant (22, 24) est prévu au niveau de la première (8) et/ou de la deuxième extrémité (10) de la section tubulaire (6) pour établir un soudage par filament chauffant entre la section tubulaire (6) et une conduite de gaz (12).

4. Système de raccord selon l'une des revendications 1 à 3,
**caractérisé en ce qu'**un filament chauffant (60) est prévu au niveau du canal traversant (56) de la fermeture de dérivation (30) pour établir un soudage par filament chauffant entre le bouchon de dérivation (30) et une ligne de transport en fibre optique (3).

5. Système de raccord selon l'une des revendications 1 à 4,
**caractérisé en ce que** l'angle (a) entre la section tubulaire (6) et l'embout de dérivation (16) se situe dans une plage allant de 5° à 60°, de préférence dans une place allant de 15° à 45°.

6. Système (1)
- avec un système de raccord (2) selon l'une des revendications 1 à 5 et
- avec une ligne de transport en fibre optique (3),
- où contour intérieur du canal traversant (56) est adapté au contour extérieur de la ligne de transport en fibre optique (3).

7. Système selon la revendication 6,
comportant en outre un manchon de transition de matériaux (90) avec un premier côté (92) en un matériau synthétique thermoplastique pour le raccordement à la section tubulaire (6) du corps moulé (4) ou à une pièce de conduite intermédiaire en un matériau synthétique thermoplastique, et avec un deuxième côté (94) en un autre matériau pour le raccordement à une conduite de gaz (12').

8. Utilisation d'un système de raccord (2) selon l'une des revendications 1 à 5 ou d'un système (1) selon la revendication 6 ou 7 pour la pose d'une ligne de transport en fibre optique (3) dans une conduite de gaz (12, 12').

9. Procédé pour poser une ligne de transport en fibre optique (3) en utilisant un système (1) selon la revendication 6 ou 7,
- dans lequel, au niveau d'un point d'interruption de la conduite de gaz (12) avec deux extrémités opposées (27, 28) de la conduite de gaz (12), la ligne de transport en fibre optique (3) est positionnée de façon à ce que la ligne de transport en fibre optique (3) passe à travers le canal traversant (56) de la fermeture de dérivation (30), à travers le canal de dérivation (20) et le canal (14) du corps moulé (4) et dans une des extrémités opposées (27, 28) de la conduite de gaz (12),
- dans lequel la première (8) et la deuxième extrémité (10) de la section tubulaire (6) sont reliées respectivement à une extrémité des deux extrémités opposées (27, 28) de la conduite de gaz (12) et
- dans lequel l'ouverture de dérivation (18) de l'embout de dérivation (16) est fermée avec la fermeture de dérivation (30).

10. Procédé selon la revendication 9,
**caractérisé en ce que** la première (8) et/ou la deuxième extrémité (10) de la section tubulaire (6) est soudée par un soudage par filament chauffant avec l'extrémité respective (27, 28) de la conduite de gaz (12).

11. Procédé selon la revendication 9 ou 10,
**caractérisé en ce que** la fermeture de dérivation (30) est soudée par filament chauffant avec l'embout de dérivation (16) et/ou l'embout de dérivation (16) est soudé parfilament chauffant avec la ligne de transport en fibre optique (3).
